# EUROPEAN PATENT APPLICATION

(11) **EP 4 651 271 A1**
(43) Date of publication of application: **19.11.2025**
(21) Application number: 25172786.3
(22) Date of filing: 28.04.2025
(51) Int. Cl.: H01M 10/613, H01M 10/6556, B60L 50/00, H01M 50/249, H01M 50/262

(54) **BATTERY ENCLOSURE AND BATTERY PACK**

(30) Priority: 10.05.2024 CN 202421011807 U; 29.09.2024 WO PCT/CN2024/122186
(71) Applicant: Eve Energy Co., Ltd., Huizhou, Guangdong 516006 (CN)
(72) Inventor: YE, Ziling, 516006 Huizhou (CN)
(74) Representative: Regimbeau

(57) **Abstract**

A battery enclosure in the battery pack includes a liquid cold plate (200), a bottom protective plate (100), and a sealing ring (400). The liquid cold plate (200) includes a first end surface and a second end surface opposite to the first end surface. The second end surface is provided with a first protruding end surface and a second protruding end surface connected to each other and protruding in the direction away from the first end surface. The vertical distance between the first protruding end surface and the second end surface is less than the vertical distance between the second protruding end surface and the second end surface. The bottom protective plate (100) is connected to the second protruding end surface and forms an accommodation space with the first protruding end surface. The sealing ring (400) is clamped in the accommodation space.

## Description

### TECHNICAL FIELD

This application relates to the field of battery technologies, specifically a battery enclosure and a battery pack.

### BACKGROUND

With the rise of new energy technologies, electric vehicles have garnered widespread attention. As a crucial component of an electric vehicle, a battery pack provides sufficient power. A battery pack includes a battery enclosure and multiple batteries arranged in series or parallel in the battery enclosure. The battery enclosure includes, from top to bottom, an enclosure frame, a liquid cold plate, and a bottom protective plate. The batteries are accommodated in the accommodation space formed by the enclosure frame. The liquid cold plate is configured to dissipate heat from the batteries inside the accommodation space. The bottom protective plate is configured to protect the liquid cold plate.

In the related art, there are mainly two methods for securing the liquid cold plate and the bottom protective plate in the battery enclosure. The first method involves using rivet nuts and bolts to fasten the bottom protective plate to the liquid cold plate. In this method, the liquid cold plate, sealing ring, and bottom protective plate are stacked sequentially from top to bottom. After passing through the bottom protective plate, the sealing ring (positioned between the bottom protective plate and the liquid cold plate), and the liquid cold plate, the bolts are secured to the rivet nuts. To ensure the sealing performance of the sealing ring, a large number of rivet nuts and bolts are required. However, this sealing method, which penetrates the sealing ring, not only complicates assembly but also causes irreversible damage to the sealing ring, thereby reducing the sealing effectiveness of the sealing ring while increasing the production cost and lowering the production efficiency. Compared to the first method, the second method can improve the production efficiency. Blind rivets are used in this method, after sequentially passing through the bottom protective plate, the sealing ring (positioned between the bottom protective plate and the liquid cold plate), and the liquid cold plate, the blind rivets rivet the bottom protective plate to the enclosure frame. Although offering higher production efficiency than rivet nuts and bolts, the second method does not improve the mounting structure between the liquid cold plate, the bottom protective plate, and the sealing ring and thus still fails to better protect the sealing ring or ensure the sealing effectiveness of the sealing ring.

### SUMMARY

An embodiment of this application provides a battery enclosure. The battery enclosure includes a liquid cold plate, a bottom protective plate, and a sealing ring.

The liquid cold plate includes a first end surface and a second end surface opposite to the first end surface. The second end surface is provided with a first protruding end surface and a second protruding end surface connected to each other and protruding in the direction away from the first end surface. A vertical distance between the first protruding end surface and the second end surface is less than a vertical distance between the second protruding end surface and the second end surface.

The bottom protective plate is connected to the second protruding end surface and forms an accommodation space with the first protruding end surface.

The sealing ring is clamped in the accommodation space.

An embodiment of this application provides a battery pack. The battery pack includes multiple batteries and the preceding battery enclosure. The batteries are connected in series or in parallel and are accommodated in the battery enclosure.

In the battery enclosure of this application, the second end surface opposite to the first end surface of the liquid cold plate is provided with a first protruding end surface and a second protruding end surface connected to each other and protruding in the direction away from the first end surface, the vertical distance between the first protruding end surface and the first end surface is less than the vertical distance between the second protruding end surface and the first end surface, and the bottom plate and the second protruding end surface are connected so that an accommodation space for clamping the sealing ring is sandwiched between the bottom protective plate and the first protruding end surface, thereby effectively sealing the bottom protective plate and the liquid cold plate through the sealing ring and preventing external liquid or water vapor from entering the accommodation space and from corroding the liquid cold plate and the bottom protective plate. Compared with the related art, there is no need to use a locking member to destroy the sealing ring, thereby better protecting the sealing ring, saving the production cost, reducing the assembly difficulty of the battery enclosure, and improving the assembly efficiency.

### BRIEF DESCRIPTION OF THE DRAWINGS

FIG. 1 is a first view of a battery enclosure according to an embodiment of this application.
FIG. 2 is a second view of a battery enclosure according to an embodiment of this application.
FIG. 3 is an exploded view of a battery enclosure according to an embodiment of this application.
FIG. 4 is a view of a battery enclosure with a hidden bottom protective plate according to an embodiment of this application.
FIG. 5 is a section view of a battery enclosure according to an embodiment of this application.
FIG. 6 is an enlarged view of part A of FIG. 5.
FIG. 7 is an enlarged view of part B of FIG. 4.

### Reference list

1000. battery enclosure;
100. bottom protective plate;
200. liquid cold plate; 210. annular stepped protrusion; 211. first annular protrusion; 212. second annular protrusion; 220. discharge groove; 230. flow channel; 240. liquid inlet pipe; 250. liquid outlet pipe; 260. upper fastening plate; 270. lower fastening plate;
300. enclosure frame; 310. engaging groove; 320. first accommodation hole; 330. second accommodation hole; 340. accommodation cavity;
400. sealing ring;
500. securing member; 510. riveting head; 520. tail rod

### DETAILED DESCRIPTION

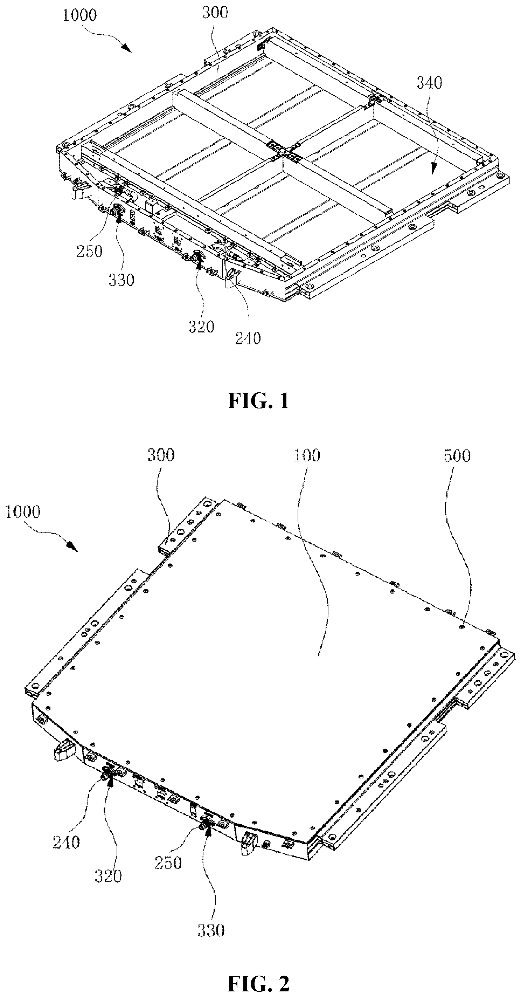

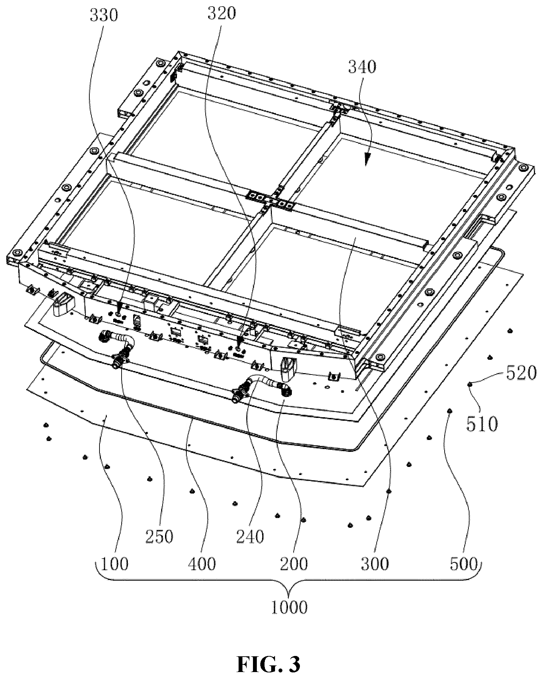

As shown in FIG. 1 to FIG. 7, an embodiment provides a battery enclosure 1000. The battery enclosure 1000 includes a bottom protective plate 100, a liquid cold plate 200, and a sealing ring 400. The liquid cold plate 200 includes a first end surface and a second end surface opposite to the first end surface. The second end surface is provided with a first protruding end surface and a second protruding end surface that is connected to each other and protrudes in the direction away from the first end surface. The vertical distance between the first protruding end surface and the second end surface is less than the vertical distance between the second protruding end surface and the second end surface. The bottom protective plate 100 is secured to the second protruding end surface and forms an accommodation space with the first protruding end surface. The sealing ring 400 is clamped in the accommodation space.

In the battery enclosure 1000, the second end surface is provided with a first protruding end surface and a second protruding end surface which are connected to each other and protrude in the direction away from the first end surface, the vertical distance between the first protruding end surface and the first end surface is less than the vertical distance between the second protruding end surface and the first end surface, and the bottom plate 100 and the second protruding end surface are connected so that an accommodation space for clamping the sealing ring 400 is sandwiched between the bottom protective plate 100 and the first protruding end surface, thereby effectively sealing the bottom protective plate 100 and the liquid cold plate 200 through the sealing ring 400 and preventing external liquid or water vapor from entering the accommodation space and from corroding the liquid cold plate 200 and the bottom protective plate 100. Compared with the related art, there is no need to use a locking member to destroy the sealing ring 400, thereby better protecting the sealing ring 400, saving the production cost, reducing the assembly difficulty of the battery enclosure 1000, and improving the assembly efficiency.

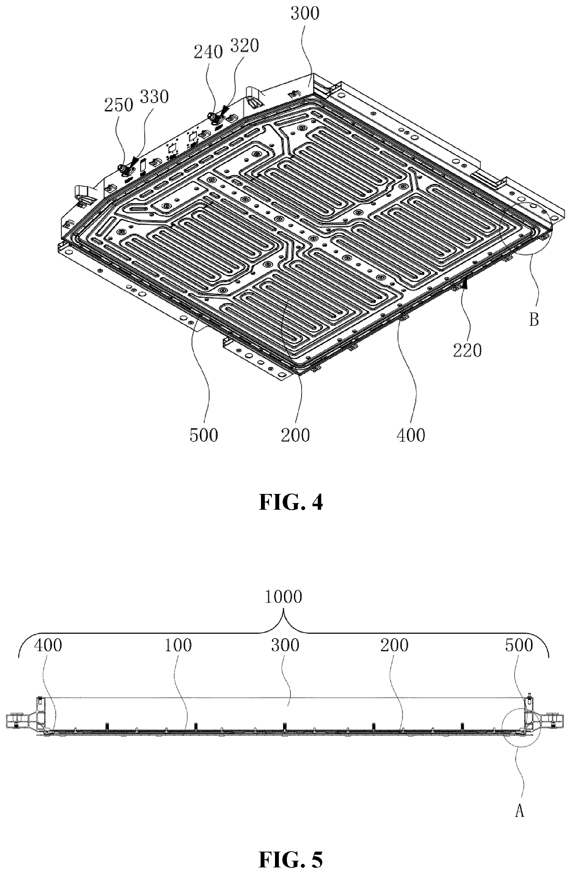

It is to be noted that the battery enclosure 1000 of this embodiment also includes an enclosure frame 300 that is disposed on the first end surface and is provided with an accommodation cavity 340 configured to accommodate a battery. The first end surface is the upper end surface of the liquid cold plate 200. The second end surface is the lower end surface of the liquid cold plate 200. In other embodiments, the liquid cold plate 200 may be disposed at the lower end of the enclosure frame 300 or may be disposed at the upper end of the enclosure frame 300. In this case, the bottom protective plate 100 is disposed at the upper end of the liquid cold plate 200 to dissipate heat from above the battery disposed in the accommodation cavity 340. As shown in FIG. 4 to FIG. 6, the peripheral side of the second end surface of the liquid cold plate 200 is provided with an annular stepped protrusion 210 that protrudes in the direction away from the first end surface, the annular stepped protrusion 210 includes a first annular protrusion 211 and a second annular protrusion 212 that are connected to each other, the second annular protrusion 212 is sleeved on the periphery of the first annular protrusion 211, the end surface of the first annular protrusion 211 facing away from the second end surface is the first protruding end surface, and the end surface of the second annular protrusion 212 facing away from the second end surface is the second protruding end surface. This arrangement is simple in structure and ingenious in design.

In other embodiments, when the second annular protrusion 212 is sleeved on the periphery of the first annular protrusion 211, it is also feasible to configure the end surface of the first annular protrusion 211 facing away from the second end surface as the second protruding end surface and configure the end surface of the second annular protrusion 212 facing away from the second end surface as the first protruding end surface. This is not limited in this embodiment.

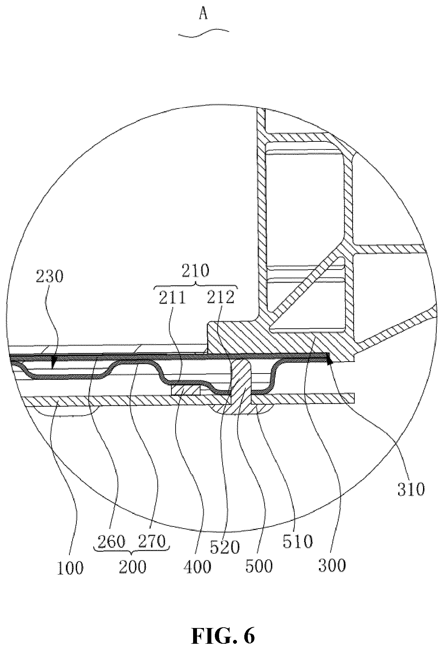

As shown in FIG. 5 and FIG. 6, the liquid cold plate 200 includes an upper fastening plate 260 and a lower fastening plate 270 that are fastened to each other, a cooling flow channel 230 is disposed between the upper fastening plate 260 and the lower fastening plate 270, the first end surface is disposed at the end of the upper fastening plate 260 facing away from the lower fastening plate 270, and the end surface of the lower fastening plate 270 facing away from the upper fastening plate 260 is provided with the first annular protrusion 211 and the second annular protrusion 212 that protrudes in the direction away from the first end surface. The liquid cold plate 200 is configured to include the upper fastening plate 260 and the lower fastening plate 270 that are fastened to each other so that the cooling flow channel 230, the first annular protrusion 211, and the second annular protrusion 212 can be disposed conveniently, thereby reducing the production difficulty of the liquid cold plate 200.

In addition, the cooling flow channel 230 does not interfere with both the first annular protrusion 211 and the second annular protrusion 212. By ensuring that neither the first annular protrusion 211 nor the second annular protrusion 212 interferes with the cooling flow channel 230, it is possible to ensure that the bottom protective plate 100 and the liquid cold plate 200 can be effectively sealed and secured without affecting the thermal management performance of the liquid cold plate 200, thereby ensuring the cooling effect on the battery.

In this embodiment, the first end surface of the upper fastening plate 260 is a flat surface to facilitate supporting the battery; the cooling flow channel 230, the first annular protrusion 211, and the second annular protrusion 212 are punched on the lower fastening plate 270; the first annular protrusion 211 and the second annular protrusion 212 do not interfere with each other; and when the upper fastening plate 260 and the lower fastening plate 270 are fastened, the end surface of the upper fastening plate 260 facing away from the first end surface abuts against and is fastened to the end surface of the lower fastening plate 270 facing away from the second end surface, thereby implementing assembly of the liquid cold plate 200. In other embodiments, a third protruding end surface may protrude from the end surface of the lower fastening plate 270 facing away from the first end surface, and a groove may be disposed on a fastening end surface where the lower fastening plate 270 is fastened to the upper fastening plate 260, where the groove is vertically opposite to the third protruding end surface. After the lower fastening plate 270 and the upper fastening plate 260 are fastened to each other, a groove formed between the third protruding end surface and the upper fastening plate 260 is the cooling flow channel 230. This processing manner of the cooling flow channel 230 is illustrative and may be adjusted according to actual requirements. This is not limited in this embodiment.

In other embodiments, the annular stepped protrusion 210 may also include annular protrusions such as a third annular protrusion, a fourth annular protrusion, and a fifth annular protrusion so that the second end surface of the lower fastening plate 270 is provided with multiple protruding end surfaces in the direction away from the first end surface. A sealing ring 400 may be accommodated in the accommodation space between each protruding end surface and the bottom protective plate 100 to improve the sealing effect on the bottom protective plate 100 and the liquid cold plate 200. Alternatively, a sealing ring 400 matching accommodation spaces between the protruding end surfaces and the bottom protective plate 100 may be accommodated in the accommodation spaces. The shape of the annular stepped protrusion 210 may be adjusted according to actual requirements. This is not limited in this embodiment.

In addition, in this embodiment, the bottom protective plate 100 is a flat plate structure, and the vertical distance between the second protruding end surface and the first end surface is greater than the vertical distance between the first end surface and the end of the cooling flow channel 230 facing away from the first end surface. This arrangement of the vertical distances can enable the bottom protective plate 100 of the flat plate structure to abut against and be secured to the second protruding end surface without interfering with the cooling flow channel 230. In addition, since the bottom protective plate 100 of this embodiment is a flat plate structure, compared with the manner in the related art in which it is required to configure the cooling flow channel 230 to be accommodated at the stamping position in the bottom protective plate 100, there is no need to perform die-opening stamping, thereby simplifying the processing steps of the bottom protective plate 100 and reducing the processing cost of the bottom protective plate 100.

In some embodiments, the battery enclosure 1000 also includes a securing member 500. The securing member 500 is configured to connect and secure the bottom protective plate 100 to the second protruding end surface.

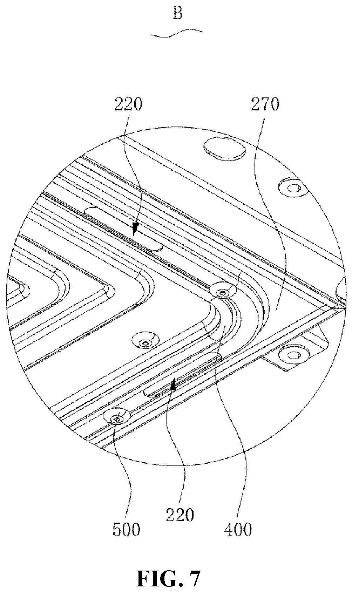

As shown in FIG. 4 and FIG. 7, in this embodiment, the securing member 500 includes a riveting head 510 and a tail rod 520 connected to each other, a cavity is formed in each of the first annular protrusion 211 and the second annular protrusion 212. The tail rod 520 passes through the bottom protective plate 100 and the second protruding end surface and is accommodated in the cavity, and the bottom protective plate 100 is riveted and secured between the riveting head 510 and the second protruding end surface. This arrangement can ensure stable securement of the bottom protective plate and the lower fastening plate 270.

The second protruding end surface is provided with a discharge groove 220 that communicates with the cavity. The securing position of the securing member 500 and the position of the discharge groove 220 do not interfere with each other. The discharge groove 220 in communication with the cavity on the second protruding end surface enables the tail rod 520 in the cavity to be discharged, thereby preventing the tail rod 520 from remaining in the cavity and generating abnormal sound. In addition, by ensuring that the securing position of the securing member 500 and the position of the discharge groove 220 do not interfere with each other, it is possible that the normal use of the securing member 500 can be ensured.

When the bottom protective plate 100 and the liquid cold plate 200 that are fastened to each other are required to be removed, the head of the securing member 500 may be first ground off. At this time, the tail rod 520 of the securing member 500 remains in the cavity, and then the tail rod 520 in the cavity is discharged along the discharge groove 220, or the tail rod 520 is blown out of the discharge groove 220 by using an air gun, thus completing removal of the bottom protective plate 100 and the liquid cold plate 200. In this embodiment, the securing member 500 is a blind rivet. The blind rivet has a simple structure, convenient riveting, and a good anchoring effect. In other embodiments, the securing member 500 may also be, for example, a fan rivet, a tree rivet, a solid rivet, or a countersunk rivet. This is not limited in this embodiment.

Multiple blind rivets are arranged in the battery enclosure 1000. The blind rivets are arranged following the contour shape of the second protruding end surface. The blind rivets jointly connect and secure the bottom protective plate 100 to the second protruding end surface to improve the securing effect of the bottom protective plate 100 and the lower fastening plate 270.

In addition, the second protruding end surface is provided with multiple discharge grooves 220 following the contour shape of the second protruding end surface. The position of each discharge groove 220 and the securing position of each securing member 500 do not interfere with each other to ensure that the blind rivet can normally rivet and secure the bottom protective plate 100 and the lower fastening plate 270.

In this embodiment, a total of 32 blind rivets are arranged following the contour shape of the second protruding end surface to ensure that the bottom protective plate 100 is connected and secured to the second protruding end surface. 28 discharge grooves 220 are formed on the second protruding end surface. The 32 blind rivets do not interfere with the 28 discharge grooves 220. In other embodiments, the number of blind rivets and the number of discharge grooves 220 may also be adjusted according to actual requirements as long as they do not interfere with each other. This is not limited in this embodiment.

To improve the securing effect of the enclosure frame 300 and the liquid cold plate 200, an engaging groove 310 is disposed on the end surface of the enclosure frame 300 facing the first end surface. The engaging groove 310 is configured to be engaged with and secured to the upper fastening plate 260 and the lower fastening plate 270. By providing the engaging groove 310 matching the upper fastening plate 260 and the lower fastening plate 270 on the end surface of the enclosure frame 300 facing the first end surface, it is ensured that the enclosure frame 300, the upper fastening plate 260, and the lower fastening plate 270 can be positioned before securing, thereby improving the subsequent securing accuracy. In some embodiments, the liquid cold plate 200 is provided with a liquid inlet pipe 240 and a liquid outlet pipe 250 that each communicate with the cooling flow channel 230, and the enclosure frame 300 is provided with a first accommodation hole 320 and a second accommodation hole 330. Either of the first accommodation hole 320 and the second accommodation hole 330 is configured to accommodate and secure the liquid inlet pipe 240, and the other of the first accommodation hole 320 and the second accommodation hole 330 is configured to accommodate and secure the liquid outlet pipe 250. The arrangement of communicating both the liquid inlet pipe 240 and the liquid outlet pipe 250 with the cooling flow channel 230 can facilitate the flow of the cooling liquid in the cooling flow channel 230. The arrangement of the first accommodation hole 320 and the second accommodation hole 330 enables the liquid inlet pipe 240 and the liquid outlet pipe 250 to be stably secured to the enclosure frame 300. In this embodiment, the first accommodation hole 320 is configured to accommodate and secure the liquid inlet pipe 240, and the second accommodation hole 330 is configured to accommodate and secure the liquid outlet pipe 250. In other embodiments, the first accommodation hole 320 may accommodate and secure the liquid outlet pipe 250, and the second accommodation hole 330 may accommodate and secure the liquid inlet pipe 240. This is not limited in this embodiment.

An embodiment provides a battery pack. The battery pack includes multiple batteries and the preceding battery enclosure 1000. The batteries are connected in series or in parallel and are accommodated in the accommodation cavity 340 of the battery enclosure 1000.

The battery pack uses the battery enclosure 1000, thereby effectively sealing the bottom protective plate 100 and the liquid cold plate 200 through the sealing ring 400 and preventing external liquid or water vapor from entering the space between the liquid cold plate 200 and the bottom protective plate 100 and from corroding the liquid cold plate 200 and the bottom protective plate 100. Compared with the related art, there is no need to use a locking member to destroy the sealing ring 400, thereby better protecting the sealing ring 400, saving the production cost, reducing the assembly difficulty of the battery enclosure 1000, and improving the assembly efficiency.

## Claims

1. A battery enclosure, comprising:
a liquid cold plate (200) including a first end surface and a second end surface opposite to the first end surface, wherein the second end surface is provided with a first protruding end surface and a second protruding end surface connected to each other and protruding in a direction away from the first end surface, and a vertical distance between the first protruding end surface and the second end surface is less than a vertical distance between the second protruding end surface and the second end surface;
a bottom protective plate (100) connected to the second protruding end surface and forming an accommodation space with the first protruding end surface; and
a sealing ring (400) clamped in the accommodation space.

2. The battery enclosure of claim 1, wherein a peripheral side of the second end surface of the liquid cold plate (200) is provided with an annular stepped protrusion (210) protruding in the direction away from the first end surface and comprising a first annular protrusion (211) and a second annular protrusion (212) connected to each other, and the second annular protrusion (212) is sleeved on a periphery of the first annular protrusion (211), wherein
an end surface of the first annular protrusion (211) facing away from the second end surface is the first protruding end surface, and an end surface of the second annular protrusion (212) facing away from the second end surface is the second protruding end surface; or
an end surface of the first annular protrusion (211) facing away from the second end surface is the second protruding end surface, and an end surface of the second annular protrusion (212) facing away from the second end surface is the first protruding end surface.

3. The battery enclosure of claim 2, further comprising:
a securing member (500) configured to connect and secure the bottom protective plate (100) to the second protruding end surface.

4. The battery enclosure of claim 3, wherein the securing member (500) comprises a riveting head (510) and a tail rod (520) connected to each other, a cavity is formed in the annular stepped protrusion (210), the tail rod (520) passes through the bottom protective plate (100) and the second protruding end surface and is accommodated in the cavity, and the bottom protective plate (100) is riveted and secured between the riveting head (510) and the second protruding end surface.

5. The battery enclosure of claim 4, wherein the second protruding end surface is provided with a discharge groove (220) that communicates with the cavity, and a securing position of the securing member (500) and a position of the discharge groove (220) do not interfere with each other.

6. The battery enclosure of claim 5, wherein
a plurality of securing members (500) are sequentially arranged along an end surface shape of the second protruding end surface, wherein either the plurality of securing members (500) connect and secure the bottom protective plate (100) to the second protruding end surface; or a plurality of discharge grooves (220) are provided along an end surface shape of the second protruding end surface, and a securing position of each of the plurality of securing members (500) and a position of each of the plurality of discharge grooves (220) does not interfere with each other; or
a plurality of securing members (500) are sequentially arranged along an end surface shape of the second protruding end surface, wherein the plurality of securing members (500) connect and secure the bottom protective plate (100) to the second protruding end surface; and a plurality of discharge grooves (220) are provided along an end surface shape of the second protruding end surface, and a securing position of each of the plurality of securing members (500) and a position of each of the plurality of discharge grooves (220) does not interfere with each other.

7. The battery enclosure of any one of claims 1 to 6, wherein the liquid cold plate (200) comprises an upper fastening plate (260) and a lower fastening plate (270) that are fastened to each other, and a cooling flow channel (230) is disposed between the upper fastening plate (260) and the lower fastening plate (270),
the first end surface is disposed at an end of the upper fastening plate (260) facing away from the lower fastening plate (270), and
an end surface of the lower fastening plate (270) facing away from the upper fastening plate (260) is provided with the first protruding end surface and the second protruding end surface protruding in the direction away from the first end surface.

8. The battery enclosure of claim 7, wherein a vertical distance between the second protruding end surface and the first end surface is greater than a vertical distance between the first end surface and an end of the cooling flow channel (230) facing away from the first end surface.

9. The battery enclosure of claim 7, further comprising:
an enclosure frame (300) provided with an accommodation cavity (340) configured to accommodate a battery, wherein,
an end surface of the enclosure frame (300) facing the first end surface is provided with an engaging groove (310) configured to be engaged with and secured to the upper fastening plate (260) and the lower fastening plate (270).

10. A battery pack, comprising a plurality of batteries and the battery enclosure (1000) of any one of claims 1 to 9, wherein the plurality of batteries are connected in series or in parallel and are accommodated in the battery enclosure (1000).
